# EUROPÄISCHE PATENTSCHRIFT

(11) **EP 3 909 872 B1**
(45) Veröffentlichungstag und Bekanntmachung des Hinweises auf die Patenterteilung: **27.08.2025**
(21) Anmeldenummer: 20174055.2
(22) Anmeldetag: 12.05.2020
(51) Int. Cl.: B65B 5/10, B65B 9/04, B65B 35/06, B65B 57/10, B65B 59/00, B65G 47/28, B65B 35/38

(54) **VERFAHREN ZUM ÜBERGEBEN VON PRODUKTEN**
METHOD FOR TRANSFERRING PRODUCTS
PROCÉDÉ DE TRANSPORT DE PRODUITS

(43) Veröffentlichungstag der Anmeldung: 17.11.2021
(60) Teilanmeldung: 25157707.8
(73) Patentinhaber: Uhlmann Pac-Systeme GmbH & Co. KG, 88471 Laupheim (DE)
(72) Erfinder: Riekenbrauck, Jörg, 88477 Schwendi (DE); Triller, Wladimir, 89291 Holzheim (DE); Scharpf, Sebastian, 89171 Illerkirchberg (DE)
(74) Vertreter: Wächter, Jochen

(56) Entgegenhaltungen:
- EP-A1- 0 856 465
- EP-A2- 2 664 553
- IT-A1- 201600 130 845
- JP-A- 2001 239 484
- US-A1- 2010 305 754
- US-A1- 2012 085 623
- US-A1- 2012 323 357
- US-A1- 2014 195 053

## Beschreibung

Die vorliegende Erfindung betrifft ein Verfahren zum Übergeben von Produkten mittels einer Übergabevorrichtung, um entsprechende Aufnahmen mit den Produkten zu füllen. Insbesondere betrifft die Erfindung ein Verfahren zum Befüllen von Blisternäpfen mit Tabletten.

Es sind verschiedene Verfahren und Vorrichtungen bekannt, mittels derer als Schüttgut bereitgestellte Produkte, insbesondere medizinische oder pharmazeutische Produkte, in geeignete Verpackungen gefüllt werden können.

Aus der EP 3 018 058 A1 ist zum Beispiel eine Füllstation zum Befüllen von Blisternäpfen mit Dragees oder Tabletten bekannt, die eine Füllschachteinheit mit mehreren Füllschächten umfasst, die sich vertikal erstrecken und durch die jeweils ein Produkt in einen Blisternapf fällt.

Die EP 2 962 944 A1 offenbart ein Verfahren zum Befüllen einer Blisterbahn mit Tabletten, bei dem die Tabletten entlang einer Förderrichtung an eine Übergabestelle bewegt werden, an der die Tabletten mit Näpfen der Blisterbahn fluchten. Die Tabletten werden dann über eine Abwurfkante in die Näpfe der Blisterbahn geschoben. Um ein Kippen der Tabletten zu verhindern, wird die Abwurfkante zum Zeitpunkt der Übergabe entgegen der ersten Förderrichtung bewegt.

Die IT 2016 00130 0845 A1 betrifft ein Verfahren und eine Vorrichtung zur Übergabe von Produkten von einer ersten zu einer zweiten Transportlinie. Dabei werden Produkte, die auf der ersten Linie zufällig angeordnet sind, auf die zweite Linie übergeben, wo sie geordnet freigegeben werden. Hierdurch wird insbesondere die Übergabe von Süßwaren und ähnlichen Produkten beliebiger Form vorgeschlagen.

Bekannte Vorrichtungen und Verfahren haben jedoch den Nachteil, dass die einzelnen Produkte zunächst vorsortiert bzw. mittels einer Zuführvorrichtung vereinzelt zugeführt werden müssen. Daraus resultiert ein erhöhter Arbeitsaufwand und komplexerer Aufbau entsprechender Füllstationen. Diese sind zudem häufig formatabhängig, sodass bei einem Produkt- oder Formatwechsel ein entsprechender Umrüstaufwand entsteht. Des Weiteren kann es insbesondere bei Tabletten zu Verschmutzungen der Zuführvorrichtungen durch Staub und Bruchteile und dadurch zu einem erhöhten Reinigungsaufwand kommen.

Schließlich werden bei bekannten Verfahren und Vorrichtungen alle bereitgestellten Produkte in die entsprechenden (Blister-) Packungen gefüllt, sodass zur Qualitätssicherung zusätzliche Maßnahmen vor dem Befüllen zu treffen sind oder Packungen mit Produkten mangelhafter Qualität im Anschluss auszusortieren und zu vernichten sind.

Alternativ werden sogenannte Pick-and-Place -Verfahren und -Vorrichtungen verwendet, bei denen Produkte in der Regel einzeln erfasst und in einer entsprechenden Aufnahme abgelegt werden. Es versteht sich, dass dabei der Aufwand insbesondere bei Massenprodukten sehr hoch ist.

Es ist daher die Aufgabe der vorliegenden Erfindung, ein Verfahren bereitzustellen, das eine zuverlässige und effiziente Befüllung von Aufnahmen mit entsprechenden Produkten ermöglicht.

Diese Aufgabe wird durch den Gegenstand des Anspruchs 1 gelöst.

Erfindungsgemäß umfasst ein Verfahren zum Übergeben von Produkten mittels einer Übergabevorrichtung, die eine Mehrzahl von Aufnahmeeinrichtungen zur Aufnahme jeweils eines Produkts umfasst, die folgenden Schritte:
a) Bereitstellen einer Vielzahl von Produkten in einem Aufnahmebereich, wobei die Produkte zumindest in einer Richtung ungeordnet sind,
b) Bestimmen der Position jedes Produkts der Vielzahl von Produkten im Aufnahmebereich,
c) Bestimmen einer Aufnahmeposition und eines Aufnahmezeitpunkts, an der und zu dem die jeweilige Aufnahmeeinrichtung ein Produkt aufnimmt, für jede Aufnahmeeinrichtung der Mehrzahl von Aufnahmeeinrichtungen basierend auf der Anordnung der Mehrzahl von Aufnahmeeinrichtungen relativ zueinander und der bestimmten Position der Produkte im Aufnahmebereich,
d) Bestimmen einer Aufnahme-Bewegungsbahn der Übergabevorrichtung entlang der bestimmten Aufnahmepositionen und Aufnahmezeitpunkte,
e) Bewegen der Übergabevorrichtung relativ zu der im Aufnahmebereich angeordneten Vielzahl von Produkten entlang der Aufnahme-Bewegungsbahn,
f) Aufnehmen jeweils eines Produkts durch jede Aufnahmeeinrichtung in der jeweils bestimmten Aufnahmeposition und zum jeweils bestimmten Aufnahmezeitpunkt während der Bewegung der Übergabevorrichtung entlang der Aufnahme-Bewegungsbahn,
g) Bewegen der bestückten Übergabevorrichtung zu einem Abgabebereich, in dem eine Vielzahl von Aufnahmen für die bewegten Produkte bereitsteht, und
h) Abgeben jeweils eines Produkts in eine Aufnahme durch jede Aufnahmeeinrichtung.

Das erfindungsgemäße Verfahren weist des Weiteren folgende Schritte auf:
Bestimmen des Zustands jedes Produkts der Vielzahl von Produkten vor Schritt c) durch Bestimmen eines oder mehrerer Qualitätsmerkmale jedes Produkts vor Schritt c);
Fortfahren mit Schritt c) nur für solche Produkte, die sich in einem vorbestimmten Zustand befinden und als Gutprodukte klassifiziert werden; und
Aussortieren von Produkten, die sich nicht in dem vorbestimmten Zustand befinden und nicht als Gutprodukte klassifiziert werden.

Auf diese Art und Weise wird ein Verfahren bereitgestellt, bei dem es möglich ist, die Produkte ungeordnet als Schüttgut bereitzustellen und sie dennoch effizient in entsprechende Aufnahmen zu füllen. Es bedarf nicht unbedingt einer vorherigen Sortierung, Ausrichtung oder Vereinzelung, wodurch das Verfahren und entsprechende Vorrichtungen zum Ausführen des erfindungsgemäßen Verfahrens einfach zu gestalten sind. Vor allem sind auch keine leicht verschmutzenden Baugruppen nötig, wodurch der Reinigungsaufwand reduziert wird. Dadurch, dass die Produkte von den Aufnahmeeinrichtungen aufgenommen werden, während sich die Übergabevorrichtung entlang der Aufnahme-Bewegungsbahn bewegt, kann für die jeweils momentan vorliegende Anordnung von Produkten im Aufnahmebereich eine schnellstmögliche Aufnahme erfolgen. Insbesondere wirken sich die Anordnung der Mehrzahl von Aufnahmeeinrichtungen relativ zueinander nicht einschränkend auf das Verfahren aus. Außerdem kann so auf besonders einfache Art und Weise eine Qualitätskontrolle realisiert werden.

Das erfindungsgemäße Verfahren ist insbesondere zur Übergabe von medizinischen oder pharmazeutischen Produkten in Form von Solida, wie zum Beispiel Dragees oder Tabletten, geeignet. Die Aufnahmen werden dann bevorzugt durch Blisternäpfe einer Blisterbahn gebildet.

Um ein möglichst effizientes Verfahren bereitzustellen, umfasst es bevorzugt das Wiederholen der Schritte a) bis h) und gegebenenfalls weiterer Verfahrensschritte.

Das Verfahren kann eingesetzt werden, wenn keine der Aufnahmen zuvor mit einem Produkt gefüllt ist, also zum Beispiel eine leere Blisterbahn im Abgabebereich bereitsteht, und durch die Übergabevorrichtung alle Aufnahmen zu befüllen sind. Das Verfahren ist aber auch zum Nachfüllen bzw. Ausgleichen einsetzbar, wenn zwar ein Teil der Aufnahmen bereits mit Produkten befüllt ist, einzelne Aufnahmen jedoch noch nicht oder nicht mehr mit einem Produkt befüllt sind. Dies ist beispielsweise der Fall, wenn zuvor bereits eine Befüllung erfolgt oder mangelhafte Produkte wieder aussortiert werden.

Folglich muss die Übergabevorrichtung in Schritt f) nicht zwangsläufig vollständig bestückt werden, sondern kann beispielsweise nur teilweise entsprechend der vorliegenden Anforderungen bestückt werden. Schritt g) umfasst dann das Bewegen einer teilweise bestückten Übergabevorrichtung.

Vorzugsweise wird das gesamte Verfahren automatisch ausgeführt. Beispielsweise wird Schritt b) mittels einer Erfassungseinrichtung zum Erfassen der Position der Vielzahl von Produkten ausgeführt und die Schritte c) und d) werden durch eine Steuereinrichtung ausgeführt, die kommunizierend mit der Erfassungseinrichtung und der Übergabevorrichtung verbunden ist.

Um eine möglichst große Flexibilität hinsichtlich der Bereitstellung der Produkte im Aufnahmebereich und der Abgabe der Produkte im Abgabebereich zu ermöglichen, ist die Übergabevorrichtung vorzugsweise zumindest in einer Ebene frei beweglich. Diese Ebene ist vorzugsweise horizontal ausgerichtet.

Es ist bevorzugt, dass die Vielzahl von Produkten in Schritt a) in einer Ebene und einlagig bereitgestellt wird, die Produkte also nicht übereinander angeordnet sind oder sich teilweise überdecken.

Die zumindest in einer Richtung ungeordneten Produkte sind zumindest in dieser Richtung in unterschiedlichen Abständen zueinander bzw. in undefinierten Positionen relativ zueinander angeordnet.

Beispielsweise können die Produkte im Aufnahmebereich in einer Ebene, vorzugsweise auf einer Transportvorrichtung, bereitgestellt werden und sind in dieser Ebene zufällig verteilt. Die Transportvorrichtung kann aber auch Führungsmittel aufweisen, wie zum Beispiel parallel verlaufende (Vibrations-) Rinnen. Die Produkte sind dann in einer Richtung quer zu den Führungsmitteln in regelmäßigen Abständen angeordnet, aber in Längsrichtung der Führungsmittel unregelmäßig angeordnet und somit in Längsrichtung der Führungsmittel ungeordnet.

Schritt b) kann das Erfassen der Position jedes Produkts im Aufnahmebereich umfassen. Ist die Vielzahl von Produkten zwischen dem Bestimmen ihrer Position gemäß Schritt b) und dem Aufnehmen der Produkte gemäß Schritt f) stationär angeordnet, entspricht die erfasste Position jedes Produkts im Aufnahmebereich der jeweiligen Aufnahmeposition, wodurch das Verfahren besonders einfach ausführbar ist.

Das Bestimmen der Position jedes Produkts gemäß Schritt b) kann aber auch das Erfassen der Position jedes Produkts und das Berücksichtigen einer Bewegung jedes Produkts in einer Transportrichtung nach dem Erfassen der Position umfassen. Das Berücksichtigen der Bewegung jedes Produkts in Transportrichtung umfasst bevorzugt auch das Bestimmen der Transportgeschwindigkeit der Produkte in Transportrichtung. Wird die Bewegung der Produkte berücksichtigt, ist das Erfassen der Position jedes Produkts im Wesentlichen örtlich und zeitlich unabhängig vom Aufnahmebereich bzw. der Aufnahme und es ist nicht erforderlich, dass die Produkte bzw. die Transportvorrichtung in der Zwischenzeit stillstehen. Das Erfassen der Position kann beispielsweise stromaufwärts vor dem Aufnahmebereich ausgeführt werden, wodurch für die Schritte c) bis f) mehr Zeit zur Verfügung steht. Sind im Aufnahmebereich mehr Produkte angeordnet, als auf einmal durch die Übergabevorrichtung aufgenommen werden können, ist also die Anzahl von Produkten im Aufnahmebereich größer als die Mehrzahl von Aufnahmeeinrichtungen der Übergabevorrichtung, kann auch eine Bewegung der Produkte zwischen der Aufnahme einer ersten Charge von Produkten durch die Übergabevorrichtung und der Aufnahme einer nachfolgenden Charge von Produkten durch die Übergabevorrichtung im Aufnahmebereich berücksichtigt werden.

Das Erfassen der Position jedes Produkts umfasst bevorzugt das Zuordnen und Speichern der Koordinaten jedes Produkts. Zudem wird bevorzugt der Zeitpunkt des Erfassens der Position jedes Produkts gespeichert.

Schritt c) umfasst bevorzugt das Zuordnen jeweils einer Aufnahmeeinrichtung zu jeweils einem Produkt basierend auf der bestimmten Position der Produkte und der Anordnung der Mehrzahl von Aufnahmeeinrichtungen relativ zueinander. Hierzu kann aus der Vielzahl von Produkten eine Teilmenge von Produkten gewählt werden, die der Anordnung der Mehrzahl von Aufnahmeeinrichtungen am ähnlichsten ist, also einen möglichst geringen Unterschied zu dieser aufweist. Dadurch wird eine möglichst kurze Aufnahme-Bewegungsbahn ermöglicht und die Schritte e) und f) sind schnell ausführbar. Generell kann die Aufnahme-Bewegungsbahn dadurch hinsichtlich ihres Verlaufs zu einer möglichst gleichmäßigen und kurzen Bewegungsbahn optimiert werden.

Das Zuordnen jeweils einer Aufnahmeeinrichtung zu jeweils einem Produkt kann durch die Steuereinrichtung mittels einer mathematischen Operation erfolgen. Insbesondere ist die Anwendung mathematischer Operationen aus dem Bereich der Bildverarbeitung denkbar. Zum Beispiel kann die Zuordnung durch Faltung von Bilddaten, wie zum Beispiel den erfassten Positionen der Produkte, mit der Anordnung der Mehrzahl von Aufnahmeeinrichtungen relativ zueinander erfolgen.

Schritt d) umfasst bevorzugt das Bestimmen der Aufnahme-Bewegungsbahn basierend auf den bestimmten Aufnahmepositionen und Aufnahmezeitpunkten. Das Bestimmen der Aufnahme-Bewegungsbahn kann durch Ermitteln bzw. Berechnen der Aufnahme-Bewegungsbahn basierend auf den bestimmten Aufnahmepositionen und Aufnahmezeitpunkten erfolgen. Die Aufnahme-Bewegungsbahn ist dann derart zu ermitteln, dass jede Aufnahmeeinrichtung zum entsprechenden Aufnahmezeitpunkt an der entsprechenden Aufnahmeposition angeordnet ist.

Schritt c) und Schritt d) können auch das Optimieren der Aufnahmepositionen und der Aufnahmezeitpunkte und somit der Aufnahme-Bewegungsbahn umfassen, sodass die Aufnahme-Bewegungsbahn zwischen der Aufnahme eines ersten Produkts und der Aufnahme eines letzten Produkts möglichst kurz ist.

Das Bestimmen der Aufnahme-Bewegungsbahn gemäß Schritt d) kann aber auch das Wählen oder Abrufen einer vorbestimmten Aufnahme-Bewegungsbahn umfassen. Dies ist zum Beispiel der Fall, wenn die Vielzahl von Produkten im Aufnahmebereich in einer Mehrzahl von Reihen angeordnet ist, zum Beispiel in (Vibrations-) Rinnen, und die Aufnahmeeinrichtungen der Übergabevorrichtung ebenfalls in einer entsprechenden Anzahl von Reihen angeordnet sind, sodass die Übergabevorrichtung derart über den Aufnahmebereich bewegt werden kann, dass die Reihen von Produkten parallel zu den Reihen von Aufnahmeeinrichtungen angeordnet sind. Da die Produkte dennoch zumindest in Längsrichtung der Rinnen ungeordnet sind, ist es weiterhin erforderlich, für jedes Produkt eine entsprechende Aufnahmeposition und einen entsprechenden Aufnahmezeitpunkt gemäß Schritt c) zu bestimmen.

In einer Abwandlung dieses Ausführungsbeispiels kann die Anzahl paralleler Rinnen auch größer als die Anzahl von Reihen von Aufnahmeeinrichtungen sein und vorzugsweise einem geradzahligen Vielfachen dieser entsprechen. Eine vorbestimmte Aufnahme-Bewegungsbahn einer ersten Charge von durch die Übergabevorrichtung aufgenommenen Produkten unterscheidet sich dann von einer vorbestimmten Aufnahme-Bewegungsbahn einer darauf erfolgenden zweiten Charge von durch die Übergabevorrichtung aufgenommen Produkten. Insbesondere sind diese Bewegungsbahnen dann quer zur Längsrichtung der Rinnen versetzt. Für jeden Übergabevorgang ist folglich eine passende Aufnahme-Bewegungsbahn auszuwählen.

Das Bestimmen des Zustands eines Produkts umfasst das Bestimmen von einem oder mehreren Qualitätsmerkmalen. Vor Schritt c) wird somit die Qualität jedes Produkts anhand zumindest eines Qualitätsmerkmals geprüft und nur Produkte ausreichender Qualität werden nachfolgend übergeben und in die Aufnahmen gefüllt. Produkte mangelhafter Qualität werden erst gar nicht durch die Übergabevorrichtung aufgenommen und folglich automatisch aussortiert.

Insbesondere umfasst der Schritt b) hierzu neben dem Erfassen der Position weiterhin das Erfassen eines Bildes bzw. von Bilddaten der Produkte und das Bestimmen des Zustands jedes Produkts umfasst das Auswerten der zuvor erfassten Bilder bzw. Bilddaten. Dadurch kann ermittelt werden, ob der Zustand der Produkte einem vorbestimmten Zustand bzw. einer vorbestimmten Qualität entspricht. Das Bestimmen des Zustands jedes Produkts umfasst vorzugsweise weiterhin das Zuordnen eines Zustands (zum Beispiel "gut" oder "nicht gut") zu jedem Produkt und ggf. das Speichern dieses Zustands.

Bei der Qualitätsprüfung anhand von Bilddaten können beispielsweise die Form, die Größe oder die Farbe der Produkte als Qualitätsmerkmale dienen.

Nur solche Produkte, die eine ausreichende Qualität aufweisen, werden gemäß Schritt c) durch die Übergabevorrichtung aufgenommen und übergeben. Produkte, die eine nicht ausreichende Qualität aufweisen, können in einem weiteren Schritt des Verfahrens aussortiert werden, beispielsweise indem sie aus dem Aufnahmebereich hinaus bewegt werden.

Somit kann durch dieselben Mittel sowohl die Position als auch der Zustand bzw. die Qualität jedes Produkts bestimmt werden, wodurch ein besonders einfaches Verfahren und eine besonders einfache Vorrichtung ermöglicht werden. Zudem sind auch keine weiteren Mittel zum Aussortieren der Produkte erforderlich.

Vorzugsweise umfasst Schritt b) das Erkennen der Ausrichtung der Produkte. Dies ist bei Produkten von Vorteil, die in einer Draufsicht eine längliche oder elliptische Form aufweisen, da diese in der Regel in entsprechend geformte Aufnahmen einzufüllen und somit mit den Aufnahmen auszurichten sind. Solche Produkte sind im Aufnahmebereich derart angeordnet, dass sie in einer Draufsicht nicht rotationssymmetrisch sind, sondern sich in einer Längsrichtung weiter erstrecken als in einer Querrichtung des jeweiligen Produkts.

Der Schritt h) kann dann weiterhin das Drehen der Übergabevorrichtung oder der jeweiligen Aufnahmeeinrichtung derart umfassen, dass das jeweils abzugebende Produkt mit der jeweiligen Aufnahme ausgerichtet ist.

Zusätzlich oder alternativ können auch die Schritte e) und f) das Drehen der Übergabevorrichtung oder der jeweiligen Aufnahmeeinrichtung derart umfassen, dass alle von der Übergabevorrichtung aufgenommenen Produkte im Wesentlichen parallel zueinander angeordnet sind und so einfach in die Aufnahmen im Abgabebereich abgegeben werden können. Obwohl die Produkte in beliebiger Ausrichtung im Aufnahmebereich bereitgestellt werden können und nicht vorab ausgerichtet werden müssen, können sie dadurch korrekt ausgerichtet in die Aufnahmen abgegeben werden.

Auch das Erkennen der Ausrichtung der Produkte erfolgt bevorzugt zusammen mit Schritt b) und mehr bevorzugt durch dieselben Mittel wie das Bestimmen der Position der Produkte, insbesondere durch eine geeignete Erfassungseinrichtung und eine anschließende Bildverarbeitung.

Im Abgabebereich ist die Vielzahl von Aufnahmen für die bewegten Produkte bereitgestellt. Dabei sind die Aufnahmen üblicherweise in vordefinierten Mustern angeordnet. Beispielsweise sind die Aufnahmen durch Blisternäpfe einer Blisterbahn gebildet, aus der nachfolgend Blisterpackungen gestanzt werden. Jede Blisterpackung weist ein Muster von Blisternäpfen auf, das sich zumindest in Förderrichtung der Blisterbahn und wahlweise auch quer zur Förderrichtung der Blisterbahn wiederholt. Es können aber auch Aufnahmen in anderer Form, wie zum Beispiel einzelne Behälter oder Behälter mit einzelnen Fächern, bereitgestellt werden, wobei bevorzugt jeweils ein Behälter oder ein Fach für ein Produkt vorgesehen ist.

Die Vielzahl von Aufnahmen im Abgabebereich können während Schritt h) stillstehen, also im Wesentlichen stationär angeordnet sein, oder sich in eine Förderrichtung bewegen. Stehen die Aufnahmen im Abgabebereich still, bewegt sich die Übergabevorrichtung entsprechend entlang der Abgabe-Bewegungsbahn über die Aufnahmen. Bewegen sich die Aufnahmen hingen in Förderrichtung, wird eine Relativbewegung zwischen den Aufnahmen und der Übergabevorrichtung beim Bestimmen der Abgabe-Bewegungsbahn berücksichtigt bzw. umfasst die Abgabe-Bewegungsbahn diese Relativbewegung.

In einer Ausführungsform kann die Abgabe-Bewegungsbahn vorbestimmt sein. Dies ist möglich, wenn die Positionen der Aufnahmeeinrichtungen und das Muster der Aufnahmen im Abgabebereich vorbestimmt sind. Zudem muss die Geschwindigkeit der Aufnahmen im Abgabebereich bekannt sein oder die Aufnahmen müssen zum Zeitpunkt der Abgabe stillstehen.

Das Verfahren kann daher vor Schritt h) das Bestimmen der Abgabe-Bewegungsbahn durch Wählen einer vorbestimmten Abgabe-Bewegungsbahn umfassen. Die Abgabe-Bewegungsbahn ist vorzugsweise basierend auf der Anordnung der Aufnahmeeinrichtungen relativ zueinander sowie auf der Anordnung der Aufnahmen relativ zueinander festgelegt.

Das Verfahren kann vor Schritt h) aber auch das Bestimmen der Abgabe-Bewegungsbahn durch Ermitteln der Abgabe-Bewegungsbahn umfassen. Dies kann zum Beispiel dann der Fall sein, wenn die Aufnahmen im Abgabebereich unregelmäßig angeordnet sind oder das erfindungsgemäße Verfahren zum Nachlegen beziehungsweise Ausgleichen verwendet wird und nur vereinzelt Aufnahmen mit Produkten zu befüllen sind.

Das Ermitteln der Abgabe-Bewegungsbahn umfasst vorzugsweise das Zuordnen jeweils einer Aufnahmeeinrichtung zu einer Aufnahme basierend auf der Anordnung der Mehrzahl von Aufnahmeeinrichtungen relativ zueinander und der Anordnung der Vielzahl von Aufnahmen relativ zueinander sowie das Ermitteln der Abgabe-Bewegungsbahn basierend auf dieser Zuordnung.

Das Verfahren kann weiterhin das Bestimmen einer Abgabeposition und eines Abgabezeitpunkts, an der und zu dem die jeweilige Aufnahmeeinrichtung ein Produkt abgibt, für jede Aufnahmeeinrichtung der Mehrzahl von Aufnahmeeinrichtungen umfassen, basierend auf der Anordnung der Mehrzahl von Aufnahmeeinrichtungen relativ zueinander und der Position der zu befüllenden Aufnahmen im Abgabebereich.

Besonders bevorzugt werden die Aufnahmen zumindest vor und nach dem Schritt h), wahlweise auch während des Schritts h), in einer Ebene in eine Förderrichtung bewegt. Die Aufnahmen sind bevorzugt in Reihen und Spalten angeordnet, die sich in dieser Ebene parallel zur Förderrichtung und senkrecht zur Förderrichtung erstrecken. Schritt h) umfasst dann das Bewegen der Übergabevorrichtung in eine erste Richtung senkrecht zur Förderrichtung, das Bewegen der Übergabevorrichtung relativ zu den Aufnahmen parallel zur Förderrichtung und das Bewegen der Übergabevorrichtung in eine zweite Richtung senkrecht zur Förderrichtung und entgegengesetzt zur ersten Richtung. Während des Bewegens der Übergabevorrichtung in die erste und die zweite Richtung werden jeweils Produkte in die Aufnahmen abgegeben. Der relative Versatz parallel zur Förderrichtung erfolgt vorzugsweise ohne Abgabe von Produkten.

In einer bevorzugten Ausführungsform ist die Vielzahl von Produkten im Aufnahmebereich, bevorzugt auch die Vielzahl von Aufnahmen im Abgabebereich, in einer Ebene angeordnet. Schritt f) umfasst dann das Bewegen der jeweiligen Aufnahmeeinrichtung relativ zu den anderen Aufnahmeeinrichtungen in einer Richtung senkrecht zu dieser Ebene und das Aktivieren dieser Aufnahmeeinrichtung. Schritt h) umfasst das Bewegen der jeweiligen Aufnahmeeinrichtung relativ zu den anderen Aufnahmeeinrichtungen in einer Richtung senkrecht zu dieser Ebene und das Deaktivieren dieser Aufnahmeeinrichtung. Dadurch kann die jeweilige Aufnahmeeinrichtung, die gerade ein Produkt aufnimmt oder abgibt, in Richtung des Produkts bzw. in Richtung der Aufnahme bewegt werden und das Produkt zuverlässig aufnehmen bzw. abgeben, ohne dass andere Aufnahmeeinrichtungen mit Produkten oder Aufnahmen kollidieren.

Besonders bevorzugt wird in Schritt f) ein Produkt nach dem anderen aufgenommen, was durch die unabhängige Bewegbarkeit und Aktivierbarkeit jeder Aufnahmeeinrichtungen weiter unterstützt wird.

Das Aktivieren einer Aufnahmeeinrichtung entspricht dem Betätigen der Aufnahmeeinrichtung derart, dass sie ein Produkt erfasst. Das Deaktivieren der Aufnahmeeinrichtung entspricht einem Betätigen der Aufnahmeeinrichtung derart, dass sie ein Produkt freigibt.

Ist eine Aufnahmeeinrichtung zum Beispiel als Saugeinrichtung ausgebildet, entspricht das Aktivieren der Aufnahmeeinrichtung dem Erzeugen eines Unterdrucks bzw. Vakuums und dadurch einer Saugwirkung auf das Produkt. Das Deaktivieren entspricht dem Aufheben des Unterdrucks bzw. Vakuums und dadurch der Saugkraft. Wahlweise kann zum Unterstützen des Abgebens auch ein Überdruck erzeugt werden.

Ist eine Aufnahmeeinrichtung durch einen Greifer gebildet, entspricht das Aktivieren der Aufnahmeeinrichtung dem Schließen des Greifers bzw. dem Bewegen des Greifers zum Erfassen eines Produkts und das Deaktivieren der Aufnahmeeinrichtung entspricht dem Öffnen des Greifers bzw. dem Bewegen des Greifers zum Abgeben des Produkts.

In Schritt h) werden die Produkte bevorzugt eines nach dem anderen durch Deaktivieren der jeweiligen Aufnahmeeinrichtung abgegeben, während die Übergabevorrichtung entlang der Abgabe-Bewegungsbahn bewegt wird, sodass auch die Abgabe gemäß Schritt h) im Wesentlichen unabhängig vom Format beziehungsweise der Anordnung der Aufnahmen im Abgabebereich erfolgt.

Vorzugsweise umfasst Schritt h) das Bewegen der Übergabevorrichtung relativ zur Vielzahl von Aufnahmen im Abgabebereich entlang einer Abgabe-Bewegungsbahn.

Die Abgabe-Bewegungsbahn kann vor Schritt h) bestimmt werden durch:
- Zuordnen jeweils einer Aufnahmeeinrichtung zu jeweils einer Aufnahme basierend auf der Anordnung der Mehrzahl von Aufnahmeeinrichtungen relativ zueinander und der Anordnung der Vielzahl von Aufnahmen relativ zueinander, und Ermitteln der Abgabe-Bewegungsbahn basierend auf dieser Zuordnung, oder
- Auswählen einer vorbestimmten Abgabe-Bewegungsbahn.

In einer bevorzugten Ausgestaltung ist die Vielzahl von Aufnahmen im Abgabebereich in einer Ebene angeordnet, und Schritt h) umfasst das Bewegen der jeweiligen Aufnahmeeinrichtung relativ zu den anderen Aufnahmeeinrichtungen in einer Richtung senkrecht zu der Ebene und das Deaktivieren dieser Aufnahmeeinrichtung.

Bei einer Ausführungsform, die nicht durch die beanspruchte Erfindung abgedeckt ist, eine mögliche Übergabeanordnung zum Übergeben von Produkten umfasst eine Transportvorrichtung zum Fördern einer Vielzahl von vereinzelten, ungeordneten Produkten in einen Aufnahmebereich, eine Fördervorrichtung zum Fördern einer Vielzahl von Aufnahmen aus einem Abgabebereich, und eine Übergabevorrichtung, die zum Übergeben von Produkten aus dem Aufnahmebereich in den Abgabebereich zwischen der Transportvorrichtung und der Fördervorrichtung bewegbar ist. Die Übergabevorrichtung umfasst eine Mehrzahl von Aufnahmeeinrichtungen zur Aufnahme jeweils eines Produkts. Jede Aufnahmeeinrichtung ist relativ zu und unabhängig von den anderen Aufnahmeeinrichtungen der Mehrzahl von Aufnahmeeinrichtungen in eine erste Richtung bewegbar, die senkrecht zu einer Ebene ausgerichtet ist, in der die Vielzahl von Produkten im Aufnahmebereich angeordnet ist. Zudem ist jede Aufnahmeeinrichtung unabhängig von den anderen Aufnahmeeinrichtungen der Mehrzahl von Aufnahmeeinrichtungen aktivierbar und deaktivierbar.

Auf diese Art und Weise wird eine Übergabeanordnung bereitgestellt, bei der Produkte ungeordnet als Schüttgut bereitgestellt werden und die es dennoch ermöglicht, die Produkte effizient einzeln in entsprechende Aufnahmen zu füllen. Es bedarf nicht unbedingt einer vorherigen Sortierung, Ausrichtung oder Vereinzelung, wodurch die Übergabeanordnung einfach ausgebildet ist. Es sind keine leicht verschmutzenden Baugruppen nötig, wodurch der Reinigungsaufwand reduziert wird. Dadurch, dass Aufnahmeeinrichtungen individuell betätigbar sind, können die Produkte von den Aufnahmeeinrichtungen in beliebigen Positionen aufgenommen und abgegeben werden, während sich die Übergabevorrichtung bewegt oder stillsteht. So kann zum einen für die jeweils momentan vorliegende Anordnung von Produkten im Aufnahmebereich eine schnellstmögliche Aufnahme erfolgen und die Abgabe ist im Wesentlichen unabhängig vom Format der Produkte und der Aufnahmen. Insbesondere wirken sich die Anordnung der Mehrzahl von Aufnahmeeinrichtungen relativ zueinander und die Anordnung der Vielzahl von Aufnahmen relativ zueinander im Wesentlichen nicht aufeinander aus. Die Übergabevorrichtung kann daher beispielsweise unabhängig von der Anzahl und Anordnung von Aufnahmen in Form von Blisternäpfen einer Blisterbahn gestaltet werden.

Vorzugsweise wird das erfindungsgemäße Verfahren mittels einer solchen Übergabeanordnung ausgeführt. Insbesondere ist es durch die frei bewegliche Übergabevorrichtung mit den einzeln aktivierbaren und deaktivierbaren Aufnahmeeinrichtungen möglich, auf möglichst effizientem Weg ungeordnete Produkte in für diese bereitgestellte Aufnahmen zu füllen. Alle bezüglich der Anordnung beschriebenen Merkmale sind daher analog auf das erfindungsgemäße Verfahren übertragbar.

Der Aufnahmebereich ist vorzugsweise auf der Oberfläche der Transportvorrichtung ausgebildet. Die Transportvorrichtung ist dazu eingerichtet, die Produkte in eine Transportrichtung zu bewegen. Vorzugsweise ist die Transportvorrichtung durch ein Transportband gebildet, auf dem die Produkte als Schüttgut willkürlich angeordnet sein können. Die Transportvorrichtung kann auch durch Rüttel- / Vibrationsrinnen gebildet sein, die in Transportrichtung parallel zueinander verlaufen. In diesem Fall sind die Produkte quer zur Transportrichtung in einem vordefinierten Abstand, nämlich dem Abstand der Rinnen, zueinander angeordnet. Dennoch können sie in Transportrichtung unterschiedliche Abstände aufweisen und sind somit zumindest in dieser Richtung ungeordnet.

Der Abgabebereich ist bevorzugt auf der Oberfläche der Fördervorrichtung ausgebildet. Die Fördervorrichtung ist dazu eingerichtet, die Aufnahmen in eine Förderrichtung zu bewegen. Die Fördervorrichtung kann auch zum Fördern der Vielzahl von Aufnahmen in den Abgabebereich dienen. Die Aufnahmen können beispielsweise durch Blisternäpfe einer Blisterbahn gebildet sein und die Fördervorrichtung umfasst die Blisterbahn sowie Fördermittel zum Fördern der Blisterbahn in die Förderrichtung. Die Fördervorrichtung kann aber zum Beispiel auch ein Förderband umfassen, auf dem geeignete Behälter als Aufnahmen bereitgestellt sind. Die Förderrichtung ist vorzugsweise parallel zur Transportrichtung der Transportvorrichtung ausgerichtet.

Die Produkte sind vorzugsweise pharmazeutische Solida, wie zum Beispiel Dragees oder Tabletten.

In einer bevorzugten Ausführungsform umfasst die Übergabeanordnung weiterhin eine Erfassungseinrichtung zum Erfassen der Vielzahl von Produkten und eine Steuereinrichtung, die kommunizierend mit der Erfassungseinrichtung, der Übergabevorrichtung und der Mehrzahl von Aufnahmeeinrichtungen verbunden ist.

Die Erfassungseinrichtung ist dazu eingerichtet, der Steuereinrichtung Informationen über die Position jedes Produkts der Vielzahl von Produkten bereitzustellen. Die Steuereinrichtung ist dazu eingerichtet, die Übergabevorrichtung und die Mehrzahl von Aufnahmeeinrichtungen in Abhängigkeit von den von der Erfassungseinrichtung bereitgestellten Informationen anzusteuern. Dadurch kann die Position der willkürlich angeordneten Produkte erfasst werden und die Aufnahme der Produkte durch die Aufnahmeeinrichtungen zielgerichtet angesteuert werden.

Die Erfassungseinrichtung ist vorzugsweise ein optischer Sensor, wie zum Beispiel eine Kamera oder eine Lichtschranke. Bevorzugt ist die Erfassungseinrichtung oberhalb einer Ebene der Transportvorrichtung angeordnet. Die Erfassungseinrichtung kann entgegen der Transportrichtung vor dem Aufnahmebereich angeordnet sein, wobei dann zum Bestimmen der Position der Produkte im Aufnahmebereich die Bewegung der Produkte zwischen dem Zeitpunkt der Erfassung ihrer Position und dem Zeitpunkt ihrer Aufnahme im Aufnahmebereich berücksichtigt werden muss. Die Erfassungseinrichtung kann aber auch auf den Aufnahmebereich gerichtet sein und die Vielzahl von Produkten gegebenenfalls in ihrer Endposition vor der Aufnahme erfassen.

Die Steuereinrichtung ist bevorzugt auch mit der Fördervorrichtung und/oder der Transportvorrichtung kommunizierend verbunden, um Informationen über die Bewegung der Produkte in Transportrichtung bzw. der Aufnahmen in Förderrichtung zu empfangen und zu berücksichtigen.

Die Steuereinrichtung ist dazu eingerichtet, die Aufnahmeposition und den Aufnahmezeitpunkt für jede Aufnahmeeinrichtung zu bestimmen. Sie steuert die Bewegung der Übergabevorrichtung entlang der ersten und der Abgabe-Bewegungsbahn, die Bewegung jeder Aufnahmeeinrichtung in die erste Richtung sowie die Aktivierung bzw. Deaktivierung jeder Aufnahmeeinrichtung.

Bevorzugt ist die Steuereinrichtung dazu eingerichtet, die Übergabevorrichtung derart anzusteuern, dass diese die Schritte e), g) und h) des erfindungsgemäßen Verfahrens ausführt. Des Weiteren kann die Steuereinrichtung dazu eingerichtet sein, jede Aufnahmeeinrichtung derart anzusteuern, dass diese Schritt f) ausführt.

Die Steuereinrichtung ist bevorzugt eine speicherprogrammierbare Steuerung (PLC).

Die Erfassungseinrichtung kann weiterhin dazu eingerichtet sein, weitere Merkmale der Produkte zu erfassen, wie zum Beispiel die Form, die Ausrichtung oder die Farbe der Produkte. Die Erfassungseinrichtung kann auch den Zustand bzw. für den Zustand kennzeichnende Qualitätsmerkmale der Produkte erfassen, wie oben beschrieben.

Gemäß obigen Ausführungen können die Aufnahmeeinrichtungen beispielsweise durch Saugeinrichtungen oder Greifer gebildet sein.

In einer bevorzugten Ausführungsform ist jede Aufnahmeeinrichtung durch eine Saugeinrichtung gebildet, die einen Sauger zum Ansaugen und Aufnehmen eines Produkts, einen ersten Aktor zum Bewegen des Saugers in die erste Richtung und eine zweiten Aktor zum individuellen Aktivieren und Deaktivieren der Saugeinrichtung umfasst. Derartige Aufnahmeeinrichtungen sind verhältnismäßig einfach aufgebaut und zugleich zuverlässig betreibbar.

Der Sauger ist insbesondere ein Saugkopf, der eine Aufnahme für ein Produkt bildet und mit einer Saugleitung verbunden ist. Der erste Aktor kann ein Stellantrieb zum Bewegen des Saugers in die erste Richtung sein. Der zweite Aktor kann die Saugkraft der Saugeinrichtung aktivieren bzw. deaktivieren, zum Beispiel indem er eine Saugleitung der Saugeinrichtung mit einer Vakuum- bzw. Unterdruckquelle verbindet oder selbst ein Vakuum oder einen Unterdruck erzeugt. Beispielsweise ist der zweite Aktor als Ventil ausgebildet.

Der erste und der zweite Aktor können auch integral ausgebildet sein. Dies kann unter anderem der Fall sein, wenn eine Bewegung des Saugers in die erste Richtung zugleich eine Verbindung zu einer Saugleitung herstellt oder trennt.

Bevorzugt wird der Unterdruck über eine Venturi-Düse direkt am Sauger erzeugt.

Besonders einfach ist die Übergabevorrichtung ausgebildet, wenn die Aufnahmeeinrichtungen in einer Ebene senkrecht zur ersten Richtung relativ zueinander festgelegt sind.

In einer Ausführungsform kann die Anordnung der Aufnahmeeinrichtungen an der Übergabevorrichtung aber auch relativ zueinander einstellbar sein. Zum Beispiel könnte der Abstand der Aufnahmeeinrichtungen in einer Ebene senkrecht zur ersten Richtung einstellbar sein, um die Spreizung der Aufnahmeeinrichtungen einzustellen. Dadurch ist die Übergabevorrichtung auch ohne Bewegung der Übergabevorrichtung an unterschiedliche Formate von Aufnahmen bzw. Anordnungen der Aufnahmen im Abgabebereich relativ zueinander anpassbar.

Weitere Merkmale und Vorteile der vorliegenden Erfindung ergeben sich aus der nachfolgenden Beschreibung unter Bezugnahme auf die Zeichnungen. In der untenstehenden Beschreibung der Zeichnungen soll das erfindungsgemäße Verfahren anschaulich anhand beispielhafter Übergabeanordnungen erläutert werden.
- Fig. 1: ist eine Draufsicht einer Übergabeanordnung gemäß einer ersten Ausführungsform.
- Fig. 2: ist eine Draufsicht einer Übergabeanordnung gemäß einer zweiten Ausführungsform.
- Fig. 3: zeigt eine Übergabevorrichtung in einer schematischen Querschnittsansicht.

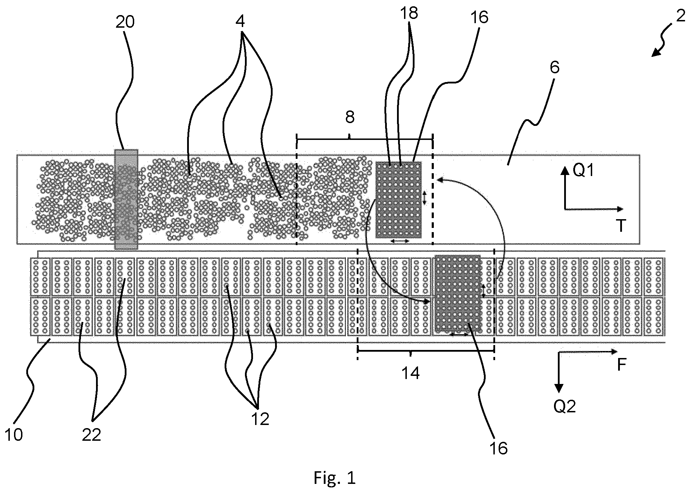

In Fig. 1 ist eine beispielhafte Übergabeanordnung 2 schematisch in einer Draufsicht dargestellt. Die Übergabeanordnung 2 zum Übergeben und Füllen von Produkten 4 in entsprechende Aufnahmen umfasst eine Transportvorrichtung 6, die eine Vielzahl von vereinzelten, ungeordneten Produkten 4 in Transportrichtung T in einen Aufnahmebereich 8 fördert, und eine Fördervorrichtung 10, die eine Vielzahl von Aufnahmen 12 in Förderrichtung F aus einem Abgabebereich 14 fördert. Des Weiteren umfasst die Übergabeanordnung 2 eine Übergabevorrichtung 16, die die Produkte 4 aus dem Aufnahmebereich 8 in den Abgabebereich 14 übergibt und hierzu zwischen der Transportvorrichtung 6 und der Fördervorrichtung 10 bewegbar ist.

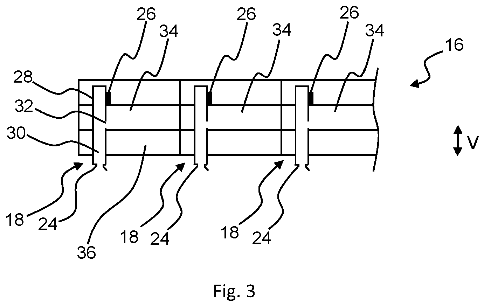

Zur besseren Veranschaulichung ist die Übergabevorrichtung 16 in Fig. 1 in einer ersten Position über dem Aufnahmebereich 8 und in einer zweiten Position über dem Abgabebereich 14 dargestellt. Eine Bewegung zwischen der ersten und der zweiten Position ist durch bogenförmige Pfeile angedeutet. Es ist auch denkbar, dass die Übergabeanordnung 2 zwei oder mehr Übergabevorrichtungen 16 umfasst, die entsprechend aneinander vorbeizubewegen sind. Die Übergabevorrichtung 16 umfasst eine Mehrzahl von Aufnahmeeinrichtungen 18 zur Aufnahme jeweils eines Produkts 4, die in Fig. 1 angedeutet und in Fig. 3 detailliert dargestellt sind.

Die Übergabeanordnung 2 umfasst ferner eine Erfassungseinrichtung 20, die die Position jedes Produkts 4 der Vielzahl von Produkten 4 erfasst. Zudem ist eine Steuereinrichtung (nicht dargestellt) vorgesehen, die kommunizierend mit der Erfassungseinrichtung 20 und der Übergabevorrichtung 16 sowie vorzugsweise mit der Transportvorrichtung 6 und der Fördervorrichtung 10 verbunden ist.

Die Transportvorrichtung 6 ist in der dargestellten Ausführungsform als Transportband ausgebildet, kann aber auch durch andere dem Fachmann bekannte Mittel, wie zum Beispiel Rüttel- bzw. Vibrationsrinnen gebildet sein. Auf der Transportvorrichtung 6 sind die Produkte 4 im Wesentlichen in einer Ebene angeordnet und zumindest in einer Richtung ungeordnet. Hier sind die Produkte 4 sowohl in Transportrichtung T als auch in einer ersten Querrichtung Q1, die senkrecht zur Transportrichtung T und parallel zur Ebene der Transportvorrichtung 6 ausgerichtet ist, ungeordnet. Die Produkte 4 weisen daher sowohl in Transportrichtung T als auch in der ersten Querrichtung Q1 beliebige, unterschiedliche Abstände zueinander auf. Umfasst die Transportvorrichtung 6 hingegen Rinnen, die sich in Transportrichtung T erstrecken, sind die Produkte 4 in der ersten Querrichtung Q1 in einem definierten Abstand zueinander angeordnet, während die Produkte 4 in Transportrichtung T in beliebigen, unterschiedlichen Abständen zueinander angeordnet sind.

Die Erfassungseinrichtung 20 ist hier schematisch angedeutet und stromaufwärts, also entgegengesetzt zur Transportrichtung T, vor dem Aufnahmebereich 8 angeordnet. Die Erfassungseinrichtung 20 erfasst zumindest die Position jedes Produkts 4 und kann, falls gewünscht, weitere Produktmerkmale wie zum Beispiel die Form, die Ausrichtung, die Farbe oder den Zustand der Produkte 4 erkennen.

Ist die Erfassungseinrichtung 20, wie dargestellt, stromaufwärts des Aufnahmebereichs 8 angeordnet, berechnet die Steuereinrichtung eine Position der Produkte 4 im Aufnahmebereich 8 anhand der von der Erfassungseinrichtung 20 erfassten Position der Produkte 4 und der Transportgeschwindigkeit der Produkte 4 in Transportrichtung T durch die Transportvorrichtung 6.

Es ist aber auch denkbar, dass die Erfassungseinrichtung 20 direkt auf den Aufnahmebereich 8 gerichtet ist und die Position jedes Produkts 4 im Aufnahmebereich 8 erfasst. Werden die Produkte 4 zwischen dem Erfassen ihrer Position und ihrer Aufnahme durch die Übergabevorrichtung 16 nicht bewegt, muss eine Bewegung in Transportrichtung T nicht berücksichtigt werden, andernfalls wie zuvor beschrieben schon.

Um die Produkte 4 aufzunehmen, ist die Übergabevorrichtung 16 relativ zur Transportvorrichtung 6 bzw. zum Aufnahmebereich 8 zumindest in Transportrichtung T bewegbar. Insbesondere wenn die Produkte auch in der ersten Querrichtung Q1 ungeordnet zueinander sind, ist die Übergabevorrichtung 16 vorzugsweise auch in der ersten Querrichtung Q1 relativ zur Transportvorrichtung 6 bzw. zum Aufnahmebereich 8 bewegbar. Bevorzugt ist die Übergabevorrichtung 16 parallel zur Ebene der Transportvorrichtung 6 im Aufnahmebereich 8 möglichst frei bewegbar.

Erkennt die Erfassungseinrichtung 20 den Zustand der Produkte 4 bzw. Qualitätsmerkmale der Produkte 4, kann die Übergabevorrichtung 16 derart angesteuert werden, dass sie nur Produkte 4 aufnimmt, die einen vorbestimmten Zustand bzw. eine ausreichende Qualität aufweisen. Produkte 4, die den vorbestimmten Zustand nicht aufweisen bzw. von mangelnder Qualität sind, verbleiben dann auf der Transportvorrichtung 6. Die Transportvorrichtung 6 bewegt solche Produkte 4 weiter in Transportrichtung T aus dem Aufnahmebereich 8 heraus, woraufhin sie beispielsweise der Vernichtung und Entsorgung zugeführt werden können.

Die Fördervorrichtung 10 kann eine Blisterbahn umfassen, die aus einer Formfolie besteht, in der als Aufnahmen 12 eine Vielzahl von Blisternäpfen ausgebildet ist. Aus einer solchen Blisterbahn werden im Anschluss an das Befüllen mit Produkten 4 mittels der Übergabevorrichtung 16 und ein daraufhin erfolgendes Siegeln einer Deckfolie an die Blisterbahn einzelne Blisterpackungen ausgestanzt, die in Fig. 1 zur Veranschaulichung angedeutet und mit den Bezugszeichen 22 versehen sind. Es ist aber auch denkbar, dass die Fördervorrichtung 10 als Förderband ausgebildet ist, auf dem entsprechende Behälter 22 mit Aufnahmen 12 angeordnet sind. Zum Beispiel bildet jede Aufnahme 12 ein Fach eines Tablettenbehälters 22.

Die Fördervorrichtung 10 stellt die Aufnahmen 12 im Abgabebereich 14 bereit, wo sie durch die Übergabevorrichtung 16 mit Produkten 4 befüllt werden. Die Fördervorrichtung 10 bewegt die Aufnahmen 12 in Förderrichtung F, die vorzugsweise parallel zur Transportrichtung T verläuft. Wie dargestellt, kann die Fördervorrichtung 10 die Aufnahmen 12 sowohl in den Abgabebereich 14 als auch aus dem Abgabebereich 14 heraus bewegen. Die Aufnahmen 12 sind vorzugsweise in einem vorbestimmten Muster relativ zueinander angeordnet. Die Übergabevorrichtung 16 ist im Abgabebereich 14 vorzugsweise in Förderrichtung F und/oder in einer zweiten Querrichtung Q2, die senkrecht zur Förderrichtung F und parallel zur Ebene der Fördervorrichtung 10 im Abgabebereich 14 ausgerichtet ist, relativ zu den Aufnahmen 12 bzw. zur Fördervorrichtung 10 bewegbar. Bevorzugt ist die Übergabevorrichtung 16 parallel zu dieser Ebene frei beweglich.

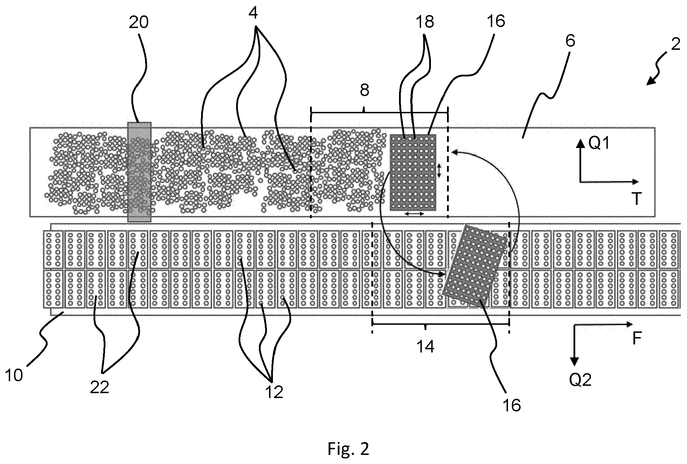

Wie in Fig. 2 zu erkennen ist, kann die Übergabevorrichtung 16 auch um eine Achse, die senkrecht zur Ebene der Transportvorrichtung 6 im Aufnahmebereich 8 bzw. der Fördervorrichtung 10 im Abgabebereich 14 ist, gedreht werden. Alternativ zur Drehung der gesamten Übergabevorrichtung 16 kann auch jede Aufnahmeeinrichtung 18 der Mehrzahl von Aufnahmeeinrichtungen 18 drehbar ausgebildet sein. Bei Produkten, die nicht rotationssymmetrisch zu einer solchen Achse sind, hat dies den Vorteil, dass die Produkte 4 trotz beliebiger Ausrichtung im Aufnahmebereich 8 derart abgegeben werden können, dass sie mit der jeweiligen Aufnahme 12 fluchten.

Zudem wird durch eine solche Drehung der Übergabevorrichtung 16 der Abstand der Aufnahmeeinrichtungen 18 in eine Richtung parallel zur ersten Querrichtung Q1 bzw. zur zweiten Querrichtung Q2 verändert, wodurch eine Anpassung an die Anordnung der Produkte im Aufnahmebereich 8 bzw. an eine Anordnung der Aufnahmen 12 im Abgabebereich 14 möglich ist. Im Übrigen entspricht die Ausführungsform nach Fig. 2 der Ausführungsform nach Fig. 1 und es wird auf die diesbezüglichen Ausführungen verwiesen.

In Fig. 3 ist die Übergabevorrichtung 16 schematisch in einer Querschnittsansicht dargestellt. Die Übergabevorrichtung 16 umfasst eine Mehrzahl von Aufnahmeeinrichtungen 18, von denen hier drei Aufnahmeeinrichtungen 18 dargestellt sind. Jede Aufnahmeeinrichtung 18 ist relativ zu und unabhängig von den anderen Aufnahmeeinrichtungen 18 parallel zu einer ersten Richtung V bewegbar, die senkrecht zur Ebene der Transportvorrichtung 6 im Aufnahmebereich 8 bzw. der Fördervorrichtung 10 im Abgabebereich 14 ist. Zudem ist jede Aufnahmeeinrichtung 18 unabhängig von den anderen Aufnahmeeinrichtungen 18 aktivierbar und deaktivierbar.

In der dargestellten bevorzugten Ausführungsform ist jede Aufnahmeeinrichtung 18 als Saugeinrichtung ausgebildet und umfasst einen Sauger 24 zum Ansaugen und Aufnehmen jeweils eines Produkts 4. Jeder Sauger 24 umfasst einen Saugnapf, der hier trichterförmig angedeutet ist und an die Form von zu übergebenden Produkten 4 angepasst sein kann. Jede Saugeinrichtung 18 umfasst zudem einen ersten Aktor 26 zum Bewegen des Saugers 24 in die erste Richtung V. Der erste Aktor 26 kann zum Beispiel ein elektrischer, magnetischer, pneumatischer, hydraulischer oder mechanischer Stellantrieb sein.

Zudem umfasst jede Saugeinrichtung 18 einen zweiten Aktor (nicht dargestellt) zum individuellen Aktivieren und Deaktivieren der Saugeinrichtung 18, der beispielsweise als Ventil oder Unterdruck- bzw. Vakuumquelle ausgebildet sein kann. Jede Saugeinrichtung 18 kann hierzu einen zylindrischen Stift 28 mit einer Bohrung 30 umfassen, wobei die Bohrung 30 an einem mit dem Sauger 24 versehenen Ende des Stifts 28 mündet. Zudem kann das andere Ende des Stifts 28 oder eine Mantelfläche des Stifts 28 eine Öffnung 32 aufweisen, die eine Fluidverbindung zwischen einer Unterdruckleitung 34 der Übergabevorrichtung 16 und der Bohrung 30 und somit zwischen dem Sauger 24 und der Unterdruckleitung 34 herstellt.

Des Weiteren kann die Übergabevorrichtung 16 eine Überdruckleitung 36 umfassen, um den Sauger 24 über die Bohrungen 30 und die Öffnung 32 oder einer andere Öffnung mit Überdruck zu versorgen, wodurch die Abgabe der Produkte 4 vom Sauger 24 unterstützt und eine Verschmutzung der Sauger 24 vermieden wird.

Die Leitungen 34, 36 können in einen Körper der Übergabevorrichtung 16 oder als separate Leitungen ausgebildet sein, zum Beispiel in Form von Schläuchen, die mit der jeweiligen Aufnahmeeinrichtung 18 verbunden sind.

Jede Aufnahmeeinrichtung 18 kann durch individuelles Betätigen eines mit den Leitungen 34, 36 verbundenen Ventils zwischen der Aufnahmeeinrichtung 18 und einer Unterdruck- bzw. Überdruckquelle aktiviert oder deaktiviert werden. Alternativ kann auch die Bewegung der Aufnahmeeinrichtung 18 in die erste Richtung V den Sauger 24 in Verbindung mit der jeweiligen Leitung 34, 36 bringen oder die Verbindung trennen, wie in Fig. 3 angedeutet.

Eine Ausführungsform des erfindungsgemäßen Verfahrens wird nachfolgend unter Bezugnahme auf die Fig. 1 und 2 beschrieben. Das erfindungsgemäße Verfahren ist grundsätzlich unabhängig von den detaillierten Merkmalen bzw. Ausprägungen der Übergabeanordnung 2, kann aber vorteilhafterweise durch diese ausgeführt werden.

Zunächst wird eine Vielzahl von Produkten 4 im Aufnahmebereich 8 bereitgestellt, wobei die Produkte 4 ungeordnet sind. Das Bereitstellen der Vielzahl von Produkten 4 erfolgt bevorzugt mittels der Transportvorrichtung 6, auf der die Produkte 4 als Schüttgut angeordnet sind und zumindest in Transportrichtung T der Transportvorrichtung 6 unterschiedliche Abstände aufweisen.

Die Position jedes Produkts 4 der Vielzahl von Produkten 4 im Aufnahmebereich 8 wird dann bestimmt. Hierzu kann die Erfassungseinrichtung 20 die Position jedes Produkts 4 erfassen und eine Steuereinrichtung der Übergabeanordnung 2 kann basierend auf der erfassten Position jedes Produkts und einer Transportgeschwindigkeit der Produkte 4 auf der Transportvorrichtung 6 die Position jedes Produkts 4 im Aufnahmebereich 8 berechnen. Die Erfassungseinrichtung 20 kann aber auch direkt auf den Aufnahmebereich 8 gerichtet sein, um die Position jedes Produkts 4 im Aufnahmebereich 8 zu erfassen.

Die Steuereinrichtung bestimmt nun eine Aufnahmeposition und einen Aufnahmezeitpunkt für jede Aufnahmeeinrichtung 18 der Übergabevorrichtung 16, zu denen die jeweilige Aufnahmeeinrichtung 18 ein Produkt 4 aufnimmt. Diese Bestimmung erfolgt basierend auf der Anordnung der Mehrzahl von Aufnahmeeinrichtungen 18 relativ zueinander und der zuvor bestimmten Position der Produkte 4 im Aufnahmebereich 8.

Anschließend wird eine Aufnahme-Bewegungsbahn der Übergabevorrichtung 16 bestimmt, entlang derer sich die Übergabevorrichtung 16 relativ zu der im Aufnahmebereich 8 angeordneten Vielzahl von Produkten 4 bewegt. Bevorzugt wird die Aufnahme-Bewegungsbahn anhand der bestimmten Aufnahmepositionen und Aufnahmezeitpunkte ermittelt. Sind die Produkte 4 im Aufnahmebereich 8 zumindest in der ersten Querrichtung Q1 in konstanten Abständen zum Beispiel in Rüttel- oder Vibrationsrinnen bereitgestellt und entsprechen diese Abstände den Abständen der Aufnahmeeinrichtungen 18 der Übergabevorrichtung 16, kann die Aufnahme-Bewegungsbahn der Übergabevorrichtung 16 auch vorbestimmt sein. Es sind dann lediglich die Aufnahmepositionen und die Aufnahmezeitpunkte zu bestimmen und die Aufnahmeeinrichtungen 18 entsprechend zu aktivieren.

Jede Aufnahmeeinrichtung 18 nimmt während der Bewegung der Übergabevorrichtung 16 entlang der Aufnahme-Bewegungsbahn in der jeweils bestimmten Aufnahmeposition und zum jeweils bestimmten Aufnahmezeitpunkt jeweils ein Produkt 4 auf. Dadurch dass die Übergabevorrichtung 16 während des Aufnehmens über die Produkte 4 bewegt wird, können die Übergabevorrichtung 16 und deren Aufnahmeeinrichtungen 18 unabhängig von der Anordnung der Vielzahl von Produkten 4 im Aufnahmebereich 8 wie gewünscht mit Produkten 4 bestückt werden. Die Aufnahme-Bewegungsbahn kann für jeden Zyklus an die jeweils im Aufnahmebereich 8 gegebene Anordnung von Produkten 4 angepasst werden.

Ist die Übergabevorrichtung 16 wie gewünscht bestückt, wird sie zum Abgabebereich 14 bewegt, indem die Vielzahl von Aufnahmen 12 für die bewegten Produkte 4 bereitsteht.

Im Abgabebereich wird die Übergabevorrichtung 16 relativ zur Vielzahl von Aufnahmen 12 entlang einer Abgabe-Bewegungsbahn bewegt, während jeweils ein Produkt 4 durch jede Aufnahmeeinrichtung 18 in eine Aufnahme 12 abgegeben wird. Da die Aufnahmen 12 vorzugsweise relativ zueinander in vorbestimmten Mustern angeordnet sind, kann die Abgabe-Bewegungsbahn der Übergabevorrichtung 16 vorbestimmt sein.

Um formatunabhängig zu sein, wird die Übergabevorrichtung 16 bevorzugt über die Aufnahmen 12 bewegt, wobei jeweils eine Aufnahmeeinrichtung 18 ein Produkt 4 in eine Aufnahme 12 abgibt, wenn diese miteinander ausgerichtet sind. Das Verfahren kann sowohl eingesetzt werden, wenn keine der Aufnahmen 12 zuvor mit einem Produkt 4 befüllt ist und durch die Übergabevorrichtung 16 alle Aufnahmen 12 befüllt werden sollen. Das Verfahren ist aber auch zum Nachfüllen einsetzbar, wenn ein Teil der Aufnahmen 12 bereits mit Produkten 4 befüllt ist, einzelne Aufnahmen 12 jedoch noch nicht oder nicht mehr mit einem Produkt 4 befüllt sind.

Entspricht der Abstand und die Ausrichtung der Aufnahmeeinrichtungen 18 in der zweiten Querrichtung Q2 dem Abstand und der Ausrichtung der Aufnahmen 12, ist es auch denkbar, dass die Übergabevorrichtung 16 im Abgabebereich 14 im Wesentlichen stillsteht und die Aufnahmen 12 in Förderrichtung F unter der Übergabevorrichtung 12 hindurch bewegt werden.

Weitere Ausführungsformen im Rahmen der Erfindung sind dem Fachmann basierend auf den hierin beschriebenen Ausführungsbeispielen ersichtlich. Durch das erfindungsgemäße Verfahren wird eine große Flexibilität bei der Aufnahme und der Abgabe von Produkten, wie zum Beispiel Tabletten, erreicht. Dadurch kann nicht nur ein breiter Einsatzbereich, sondern auch eine denkbar einfache Ausbildung des Verfahrens ermöglicht werden.

## Patentansprüche

1. Verfahren zum Füllen von Produkten (4) in Aufnahmen (12) mittels einer Übergabevorrichtung (16), die eine Mehrzahl von Aufnahmeeinrichtungen (18) zur Aufnahme jeweils eines Produkts (4) umfasst, mit folgenden Schritten:
a) Bereitstellen einer Vielzahl von Produkten (4) in einem Aufnahmebereich (8), wobei die Produkte (4) zumindest in einer Richtung ungeordnet sind,
b) Bestimmen der Position jedes Produkts (4) der Vielzahl von Produkten (4) im Aufnahmebereich (8),
c) Bestimmen einer Aufnahmeposition und eines Aufnahmezeitpunkts, an der und zu dem die jeweilige Aufnahmeeinrichtung (18) ein Produkt (4) aufnimmt, für jede Aufnahmeeinrichtung (18) der Mehrzahl von Aufnahmeeinrichtungen (18) basierend auf der Anordnung der Mehrzahl von Aufnahmeeinrichtungen (18) relativ zueinander und der bestimmten Position der Produkte (4) im Aufnahmebereich (8),
d) Bestimmen einer Aufnahme-Bewegungsbahn der Übergabevorrichtung (16) entlang der bestimmten Aufnahmepositionen und Aufnahmezeitpunkte der Aufnahmeeinrichtungen (18),
e) Bewegen der Übergabevorrichtung (16) relativ zu der im Aufnahmebereich (8) angeordneten Vielzahl von Produkten (4) entlang der Aufnahme-Bewegungsbahn,
f) Aufnehmen jeweils eines Produkts (4) durch jede Aufnahmeeinrichtung (18) in der jeweils bestimmten Aufnahmeposition und zum jeweils bestimmten Aufnahmezeitpunkt während der Bewegung der Übergabevorrichtung (16) entlang der Aufnahme-Bewegungsbahn,
g) Bewegen der bestückten Übergabevorrichtung (16) zu einem Abgabebereich (14), in dem eine Vielzahl von Aufnahmen (12) für die bewegten Produkte (4) bereitsteht, und
h) Abgeben jeweils eines Produkts (4) durch jede Aufnahmeeinrichtung (18) in eine Aufnahme (12),
**dadurch gekennzeichnet, dass** das Verfahren weiterhin die Schritte umfasst:
Bestimmen des Zustands jedes Produkts (4) der Vielzahl von Produkten (4) durch Bestimmen eines oder mehrerer Qualitätsmerkmale jedes Produkts vor Schritt c),
Fortfahren mit Schritt c) nur für solche Produkte (4), die sich in einem vorbestimmten Zustand entsprechend einer vorbestimmten Qualität befinden, und
Aussortieren von Produkten (4), die sich nicht in dem vorbestimmten Zustand befinden.

2. Verfahren nach Anspruch 1, **dadurch gekennzeichnet, dass** Schritt b) das Erfassen der Position jedes Produkts (4) im Aufnahmebereich (8) umfasst.

3. Verfahren nach Anspruch 1 oder 2, **dadurch gekennzeichnet, dass** Schritt b) das Erfassen der Position jedes Produkts (4) und das Berücksichtigen einer Bewegung jedes Produkts (4) in einer Transportrichtung (T) nach dem Erfassen der Position umfasst.

4. Verfahren nach einem der vorangehenden Ansprüche, **dadurch gekennzeichnet, dass** Schritt c) das Zuordnen jeweils einer Aufnahmeeinrichtung (18) zu jeweils einem Produkt (4) basierend auf der bestimmten Position der Produkte (4) und der Anordnung der Mehrzahl von Aufnahmeeinrichtungen (18) relativ zueinander umfasst.

5. Verfahren nach Anspruch 4, **dadurch gekennzeichnet, dass** das Zuordnen jeweils einer Aufnahmeeinrichtung (18) zu jeweils einem Produkt (4) durch die Steuereinrichtung mittels einer mathematischen Operation erfolgt.

6. Verfahren nach einem der vorangehenden Ansprüche, **dadurch gekennzeichnet, dass** Schritt d) das Ermitteln der Aufnahme-Bewegungsbahn basierend auf den bestimmten Aufnahmepositionen und Aufnahmezeitpunkten umfasst, oder das Auswählen einer vorbestimmten Aufnahme-Bewegungsbahn umfasst.

7. Verfahren nach Anspruch 6, bezogen auf die erste Alternative, **dadurch gekennzeichnet, dass** Schritt c) und d) das Optimieren der Aufnahmepositionen und der Aufnahmezeitpunkte und somit der Aufnahme-Bewegungsbahn umfassen, sodass die Aufnahme-Bewegungsbahn zwischen der Aufnahme eines ersten Produkts (4) und der Aufnahme eines letzten Produkts (4) möglichst kurz ist.

8. Verfahren nach einem der vorangehenden Ansprüche, **dadurch gekennzeichnet, dass** Schritt b) weiterhin das Erkennen der Ausrichtung der Produkte (4) umfasst, und
Schritt e) oder f) weiterhin das Drehen der Übergabevorrichtung (16) oder der jeweiligen Aufnahmeeinrichtung (18) derart umfasst, dass das jeweils aufzunehmende Produkt (4) mit den anderen zu übergebenden Produkten (4) an der Übergabevorrichtung (16) ausgerichtet ist, oder Schritt h) weiterhin das Drehen der Übergabevorrichtung (16) oder der jeweiligen Aufnahmeeinrichtung (18) derart umfasst, dass das jeweils abzugebende Produkt (4) mit der jeweiligen Aufnahme (12) ausgerichtet ist.

9. Verfahren nach einem der vorangehenden Ansprüche, **dadurch gekennzeichnet, dass** die Vielzahl von Produkten (4) im Aufnahmebereich (8) in einer Ebene angeordnet sind,
Schritt f) das Bewegen der jeweiligen Aufnahmeeinrichtung (18) relativ zu den anderen Aufnahmeeinrichtungen (18) in einer Richtung senkrecht zu der Ebene und das Aktivieren dieser Aufnahmeeinrichtung (18) umfasst.

10. Verfahren nach einem der vorangehenden Ansprüche, **dadurch gekennzeichnet, dass** Schritt h) das Bewegen der Übergabevorrichtung (16) relativ zur Vielzahl von Aufnahmen (12) im Abgabebereich (14) entlang einer Abgabe-Bewegungsbahn umfasst.

11. Verfahren nach Anspruch 10, **dadurch gekennzeichnet, dass** es vor Schritt h) das Bestimmen der Abgabe-Bewegungsbahn umfasst, das erfolgt durch:
Zuordnen jeweils einer Aufnahmeeinrichtung (18) zu jeweils einer Aufnahme (12) basierend auf der Anordnung der Mehrzahl von Aufnahmeeinrichtungen (18) relativ zueinander und der Anordnung der Vielzahl von Aufnahmen (12) relativ zueinander, und Ermitteln der Abgabe-Bewegungsbahn basierend auf dieser Zuordnung, oder
Auswählen einer vorbestimmten Abgabe-Bewegungsbahn.

12. Verfahren nach einem der vorangehenden Ansprüche, **dadurch gekennzeichnet, dass** die Vielzahl von Aufnahmen (12) im Abgabebereich (14) in einer Ebene angeordnet ist, und Schritt h) das Bewegen der jeweiligen Aufnahmeeinrichtung (18) relativ zu den anderen Aufnahmeeinrichtungen (18) in einer Richtung senkrecht zu der Ebene und das Deaktivieren dieser Aufnahmeeinrichtung (18) umfasst.

## Claims

1. A method for filling products (4) into receptacles (12) by means of a transfer apparatus (16) which comprises a plurality of receiving devices (18) each for receiving a product (4), said method comprising the following steps:
a) providing a plurality of products (4) in a receiving region (8), wherein the products (4) are unordered at least in one direction,
b) determining the position of each product (4) of the plurality of products (4) in the receiving region (8),
c) determining, for each receiving device (18) of the plurality of receiving devices (18), a receiving position and a receiving time, in which and at which the particular receiving device (18) receives a product (4), on the basis of the arrangement of the plurality of receiving devices (18) relative to one another and the determined position of the products (4) in the receiving region (8),
d) determining a receiving movement path of the transfer apparatus (16) along the determined receiving positions and receiving times of the receiving devices (18),
e) moving the transfer apparatus (16) relative to the plurality of products (4) arranged in the receiving region (8) along the receiving movement path,
f) receiving a product (4) by each receiving device (18) in the respective determined receiving positions and at the respective determined receiving times during the movement of the transfer apparatus (16) along the receiving movement path,
g) moving the populated transfer apparatus (16) to a dispensing region (14), in which a plurality of receptacles (12) for the moved products (4) is ready, and
h) dispensing a product (4) by each receiving device (18) into a receptacle (12) in each case,
**characterised in that** the method further comprises the steps of:
determining the state of each product (4) of the plurality of products (4) by determining one or more quality features of each product before step c),
continuing with step c) only for those products (4) that are in a predetermined state in accordance with a predetermined quality, and
rejecting products (4) that are not in the predetermined state.

2. The method according to claim 1, **characterised in that** step b) comprises detecting the position of each product (4) in the receiving region (8).

3. The method according to claim 1 or 2, **characterised in that** step b) comprises detecting the position of each product (4) and taking into consideration a movement of each product (4) in a transport direction (T) following the detection of the position.

4. The method according to any one of the preceding claims, **characterised in that** step c) comprises assigning a receiving device (18) in each case to a product (4) on the basis of the determined position of the products (4) and the arrangement of the plurality of receiving devices (18) relative to one another.

5. The method according to claim 4, **characterised in that** the assignment of each receiving device (18) to a product (4) is performed by the control device by means of a mathematical operation.

6. The method according to any one of the preceding claims, **characterised in that** step d) comprises ascertaining the receiving movement path on the basis of the determined receiving positions and receiving times, or comprises selecting a predetermined receiving movement path.

7. The method according to claim 6, based on the first alternative, **characterised in that** step c) and d) comprise optimising the receiving positions and the receiving times and thus the receiving movement path, so that the receiving movement path between the receiving of a first product (4) and the receiving of a last product (4) is as short as possible.

8. The method according to any one of the preceding claims, **characterised in that** step b) furthermore comprises recognising the orientation of the products (4), and step e) or f) furthermore comprises rotating the transfer apparatus (16) or the particular receiving device (18) in such a way that the product (4) to be received is oriented with the other products (4) to be transferred on the transfer apparatus (16), or step h) furthermore comprises rotating the transfer apparatus (16) or the particular receiving device (18) in such a way that the particular product (4) to be dispensed is oriented with the respective receptacle (12).

9. The method according to any one of the preceding claims, **characterised in that** the plurality of products (4) are arranged in one plane the receiving region (8),
step f) comprises moving the particular receiving device (18) relative to the other receiving devices (18) in a direction perpendicular to the plane and activating this receiving device (18).

10. The method according to any one of the preceding claims, **characterised in that** step h) comprises moving the transfer apparatus (16) relative to the plurality of receptacles (12) in the dispensing region (14) along a dispensing movement path.

11. The method according to claim 10, **characterised in that** it comprises, before step h), determining the dispensing movement path, which is performed by:
assigning a receiving device (18) in each case to a receptacle (12) on the basis of the arrangement of the plurality of receiving devices (18) relative to one another and the arrangement of the plurality of receptacles (12) relative to one another, and ascertaining the dispensing movement path on the basis of this assignment, or
selecting a predetermined dispensing movement path.

12. The method according to any one of the preceding claims, **characterised in that** the plurality of receptacles (12) is arranged in one plane in the dispensing region (14), and step h) comprises moving the particular receiving device (18) relative to the other receiving devices (18) in a direction perpendicular to the plane and deactivating this receiving device (18).

## Revendications

1. Procédé, destiné à charger des produits (4) dans des réceptacles (12) au moyen d'un dispositif de transfert (16), qui comprend une multiplicité de systèmes de réception (18), destinés à recevoir chacun un produit (4), avec les étapes suivantes, consistant à :
a) mettre à disposition une pluralité de produits (4) dans une zone de réception (8), les produits (4) étant désordonnés au moins dans une direction,
b) déterminer la position de chaque produit (4) de la pluralité de produits (4) dans la zone de réception (8),
c) déterminer une position de réception et un moment de réception sur laquelle et auquel le système de réception (18) respectif réceptionne un produit (4), pour chaque système de réception (18) de la multiplicité de systèmes de réception (18), sur la base de la disposition de la multiplicité de systèmes de réception (18) les uns par rapport aux autres et de la position déterminée des produits (4) dans la zone de réception (8),
d) déterminer une trajectoire de déplacement pour la réception du dispositif de transfert (16) le long de la position de réception déterminée et aux moments de réception des systèmes de réception (18),
e) déplacer le dispositif de transfert (16) le long de la trajectoire de déplacement pour la réception par rapport à la pluralité de produits (4) placés dans la zone de réception (8),
f) réceptionner chaque fois un produit (4) par chaque système de réception (18) dans la position de réception respectivement déterminée et au moment de réception respectivement déterminé pendant le déplacement du dispositif de transfert (16) le long de la trajectoire de déplacement pour la réception,
g) déplacer le dispositif de transfert (16) chargé vers une zone de distribution (14), dans laquelle une pluralité de réceptacles (12) est mise à disposition pour les produits (4) déplacés et
h) restituer chaque fois un produit (4) par chaque système de réception (18) dans un réceptacle (12),
**caractérisé en ce que** le procédé comprend par ailleurs les étapes consistant à :
déterminer l'état de chaque produit (4) de la pluralité de produits (4) par détermination d'une ou de plusieurs caractéristiques qualitatives de chaque produit avant l'étape c),
poursuivre avec l'étape c) uniquement pour des produits (4) se trouvant dans un état prédéfini correspondant à une qualité prédéfinie et
éliminer par tri les produits (4) ne se trouvant pas dans un état prédéfini.

2. Procédé selon la revendication 1, **caractérisé en ce que** l'étape b) comprend la détermination de la position de chaque produit (4) dans la zone de réception (8).

3. Procédé selon la revendication 1 ou 2, **caractérisé en ce que** l'étape b) comprend la détection de la position de chaque produit (4) et la prise en considération d'un déplacement de chaque produit (4) dans une direction de transport (T), après la détection de la position.

4. Procédé selon l'une quelconque des revendications précédentes, **caractérisé en ce que** l'étape c) comprend l'affectation de chaque fois un système de réception (18) à chaque fois un produit (4), sur la base de la position déterminée des produits (4) et de la disposition de la multiplicité de systèmes de réception (18) l'un par rapport à l'autre.

5. Procédé selon la revendication 4, **caractérisé en ce que** l'affectation de chaque fois un système de réception (18) à chaque fois un produit (4) s'effectue par le système de commande, au moyen d'une opération mathématique.

6. Procédé selon l'une quelconque des revendications précédentes, **caractérisé en ce que** l'étape d) comprend la recherche de la trajectoire de déplacement pour la réception sur la base des positions de réception et moments de réception déterminés ou la sélection d'une trajectoire de déplacement prédéfinie pour la réception.

7. Procédé selon la revendication 6, rapportée à la première variante, **caractérisé en ce que** l'étape c) et d) comprennent l'optimisation de la position de réception et des moments de réception et ainsi de la trajectoire de déplacement pour la réception, de sorte que la trajectoire de déplacement pour la réception entre le réceptacle d'un premier produit (4) et le réceptacle d'un dernier produit (4) soit la plus courte possible.

8. Procédé selon l'une quelconque des revendications précédentes, **caractérisé en ce que** l'étape b) comprend par ailleurs l'identification de l'alignement des produits (4) et
l'étape e) ou f) comprend par ailleurs la rotation du dispositif de transfert (16) ou du système de réception (18) respectif, de telle sorte que le produit (4) qui doit être respectivement réceptionné soit aligné avec les autres produits (4) à transférer sur le dispositif de transfert (16) ou l'étape h) comprend par ailleurs la rotation du dispositif de transfert (16) ou du système de réception (18) respectif, de telle sorte que le produit (4) à distribuer respectif soit aligné avec le réceptacle (12) respectif.

9. Procédé selon l'une quelconque des revendications précédentes, **caractérisé en ce que** la pluralité von produits (4) est placée dans un plan dans la zone de réception (8),
l'étape f) comprend le déplacement du système de réception (18) respectif par rapport aux autres systèmes de réception (18), dans une direction à la perpendiculaire du plan et l'activation dudit système de réception (18).

10. Procédé selon l'une quelconque des revendications précédentes, **caractérisé en ce que** l'étape h) comprend le déplacement du dispositif de transfert (16) par rapport à la pluralité de réceptacles (12) dans la zone de distribution (14), le long d'une trajectoire de déplacement pour la distribution.

11. Procédé selon la revendication 10, **caractérisé en ce qu'**il comprend avant l'étape h) la détermination de la trajectoire de déplacement pour la distribution, ce qui s'effectue par :
l'affectation de chaque fois un système de réception (18) à chaque fois un réceptacle (12), sur la base de la disposition de la multiplicité de systèmes de réception (18) les uns par rapport aux autres et de la disposition de la pluralité de réceptacles (12) les uns par rapport aux autres et par recherche de la trajectoire de déplacement pour la distribution, sur la base de ladite affectation ou
la sélection d'une trajectoire de déplacement prédéfinie pour la distribution.

12. Procédé selon l'une quelconque des revendications précédentes, **caractérisé en ce que** la pluralité de réceptacles (12) est placée dans un plan dans la zone de distribution (14) et l'étape h) comprend le déplacement du système de réception (18) respectif par rapport aux autres systèmes de réception (18), dans une direction à la perpendiculaire du plan et la désactivation dudit système de réception (18).
